# EUROPÄISCHE PATENTSCHRIFT

(11) **EP 2 829 783 B1**
(45) Veröffentlichungstag und Bekanntmachung des Hinweises auf die Patenterteilung: **12.07.2017**
(21) Anmeldenummer: 14177752.4
(22) Anmeldetag: 21.07.2014
(51) Int. Cl.: F16L 21/035, F16L 21/06

(54) **System zum Leiten eines Mediums**
System for conducting a medium
Système destiné à guider un milieu

(30) Priorität: 22.07.2013 DE 102013107780
(43) Veröffentlichungstag der Anmeldung: 28.01.2015
(73) Patentinhaber: Kaiser, Christof, 78187 Geisingen (DE)
(72) Erfinder: Kaiser, Christof, 78187 Geisingen (DE)
(74) Vertreter: Patentanwälte und Rechtsanwalt Weiß, Arat & Partner mbB

(56) Entgegenhaltungen:
- EP-A2- 0 312 317
- DE-A1- 10 261 557
- DE-C1- 19 642 338
- US-A1- 2009 302 601

## Beschreibung

Die Erfindung betrifft ein System zum Leiten eines Mediumsentsprechend dem Oberbegriff von Anspruch 1.

### Stand der Technik

Rohrschellen sind in vielfältiger Form und Ausführung bekannt und auf dem Markt. Sie dienen beispielsweise dazu, einen Gartenschlauch an einem Wasserhahn festzulegen. Dabei umfasst die Rohrschelle den Schlauch klemmend und schnürt ihn ein, so dass er auf einem stufenartig ausgebildeten Auslassnippel des Wasserhahns festgelegt werden kann.

Aus der DE 10 2011 011 383 A1 ist eine sehr kompliziert aufgebaute Schlauch-Kupplungsvorrichtung zum Ankuppeln eines eine Druckluftleitung enthaltenen Schlauchs an einen Maschinenanschluss einer pneumatischen Handwerkzeugmaschine bekannt.

Die DE 20 2005 000 624 U1 zeigt eine andere Kupplungseinrichtung zum Anschliessen eines Rohres, aufweisend ein rohrförmiges Aufnahmeteil und einen aufblasbaren Ringkörper. Dabei ist der aufblasbare Ringkörper abdichtend an dem rohrförmigen Aufnahmeteil befestigt und durch Aufblasen, Abdichten, gegen das anzuschliessende Rohr drückbar.

Ein System der o.g. Art ist aus der EP 0 312 317 A2 bekannt. Dort wird ein System zum Leiten eines Mediums in einem Rohr gezeigt, welches mit einem Kupplungsstück, das einen Rohrabschnitt aufweist, mittels einer Schelle verbindbar ist. Der Rohrabschnitt bildet auch einen Anschlag, der von der Schelle hintergreifbar ist.

### Aufgabe

Der vorliegenden Erfindung liegt die Aufgabe zugrunde, ein möglichst einfach ausgestaltetes System zu schaffen, mit dem ein Rohr an einem Kupplungsstück festgelegt werden kann.

### Lösung der Aufgabe

Zur Lösung dieser Aufgabe führen die Merkmale des kennzeichnenden Teils von Anspruch 1.

Die Schelle selbst ist relativ einfach ausgebildet. Sie besteht aus zumindest zwei Schalen, die gelenkig miteinander verbunden sind. Diese zwei Schalen gewährleisten, dass das Rohr umgriffen werden kann, wobei einerseits der Innenflansch, der an jeder Schale vorgesehen ist, in den Ringkanal zwischen Aussenring und Kupplungsstück einfährt.

Zum Schliessen und Festlegen der beiden Schalen an dem Rohr bzw. dem Kupplungsstück werden die beiden Schalen um das Rohr gelegt, wobei endwärtige Laschen aufeinander treffen. Diese beiden Laschen müssen miteinander verbunden werden, was beispielsweise durch einen Schraubenbolzen geschieht, der eine Ausnehmung in einer Lasche durchsetzt. Der Schraubenbolzen ist bevorzugt so ausgestaltet, dass er mit einer Hand festgelegt werden kann. Dies bedeutet, dass bevorzugt die Mutter selbsthemmend ausgebildet ist. Hierzu ist das Zusammenwirken zwischen Mutter und Schraubenbolzen so ausgestaltet, dass die Mutter aus ihrer Ausnehmung angehoben werden kann, so dass sie sich frei über einen gewissen Winkelbereich dreht. Nach diesem Winkelbereich allerdings schlägt die Mutter an einem Anschlag an und ist damit gegen ein weiteres Verdrehen gesichert. Nunmehr kann die Schraube mit einer Hand festgezogen werden. Eine ähnliche verwendbare Ausgestaltung findet sich in der WO 01/29472.

Mit dieser Ausgestaltung wird gewährleistet, dass die Schelle auf jeden Fall einerseits an dem Kupplungsstück festgelegt ist. Des weiteren ist auch der Abstand zwischen Rohr bzw. Rohrabschnitt und Kupplungsstück genau definiert. Durch die und/oder Wahl gemäß dem Hauptanspruch soll vom Erfindungsgedanken umfasst sein, dass das Rohr in den Rohrabschnitt oder aber der Rohrabschnitt in das Rohr eingeführt wird. In der Regel wird allerdings bevorzugt, dass der Rohrabschnitt in das Rohr eingeführt wird.

Das vorliegende System soll vor allem dem Führen eines Druckluftmediums dienen. Deswegen dürfte es ratsam sein, zumindest das Rohr aus Metall herzustellen. Bevorzugt wird auch das Kupplungsstück und damit auch der Rohrabschnitt aus Metall hergestellt. Dabei wird wiederum Aluminium bevorzugt.

Zur Begrenzung der Einschubtiefe des Rohrs ist erfindungsgemäss an dem Rohrabschnitt ein Aussenring vorgesehen, an den das Rohr beim Aufschieben auf den Rohrabschnitt anschlägt. Dabei ist der Aussenring bevorzugt in einem derartigen Abstand von dem Kupplungsstück angeordnet, dass sich zwischen dem Aussenring und dem Kupplungsstück ein Ringkanal bildet, in dem ein der Schelle zugeordnetes Element eingreifen kann. Dieses Element kann beispielsweise ein Innenflansch sein, der in den Ringkanal eingesetzt wird, so dass er krallenartig den Aussenring auf dem Rohrabschnitt übergreift.

Andererseits muss die Schelle aber ebenfalls festgelegt werden. Dies geschieht in einem Ausführungsbeispiel mit Hilfe eines Ringwalles, der sich im Inneren der Schelle befindet und über die Schelleninnenfläche hervorsteht. Anstelle eines Ringwalls können natürlich auch entsprechende Zacken, kugelartige Vorsprünge od.dgl. vorgesehen sein. Wichtig ist nur, dass sie sich in das Fleisch des Rohrmantels eingraben können. Denkbar ist natürlich auch ein rutschfester Ring aus beliebigem flexiblen Werkstoff, wobei allerdings die Gefahr besteht, dass bei einem Führen eines Mediums unter höherem Druck das Rohr doch aus der Schelle rutschen kann.

Eine andere Möglichkeit besteht darin, dass entweder vom Rohr selbst entsprechende Vorsprünge abragen oder dem Rohr klemmend aufgesetzt werden, die dann von entsprechenden Ausformungen der Schelle übergriffen werden. Hier sind viele Möglichkeiten denkbar und sollen vom Erfindungsgedanken umfasst sein.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht von Teilen eines erfindungsgemässen Systems zum Leiten eines Mediums;
**Figur 2** eine perspektivische Ansicht eines Beispiels, das zum Schutzumfang der Erfindung nicht gehört.
**Figur 3** eine perspektivische Ansicht eines Teils einer erfindungsgemässen Schelle;
**Figur 4** eine perspektivische Ansicht eines weiteren Teils einer erfindungsgemässen Schelle;
**Figur 5** eine Draufsicht auf die Schelle gemäss Figur 4 von der Aussenseite der Schelle her.

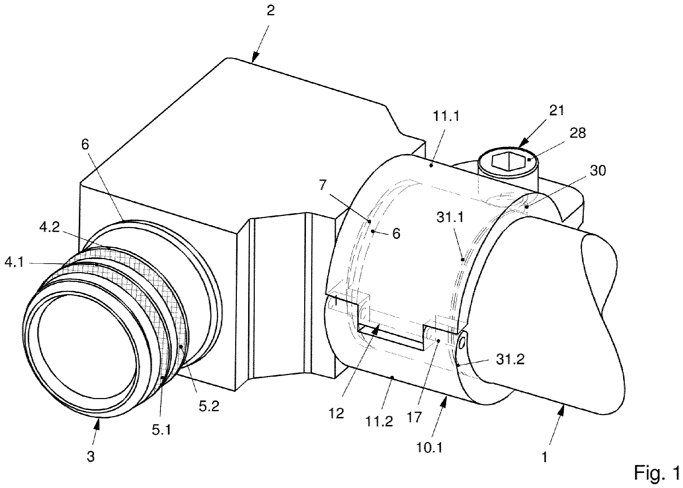

Gemäss Figur 1 ist von einem erfindungsgemässen System zum Leiten eines Mediums ein Stück eines Rohrs 1 gezeigt, welches mit einem Kupplungsstück 2 verbunden ist. Hierzu weist dieses Kupplungsstück 2 einen Rohrabschnitt 3 auf, wie er auch im rechten Winkel zu dem eigentlichen, mit dem Rohr 1 verbundenen Rohrabschnitt identisch ausgebildet ist. In den Rohrabschnitt 3 sind zwei Ringnuten 4.1 und 4.2 eingeformt, die der Aufnahme von jeweils einer Ringdichtung 5.1 und 5.2 dienen.

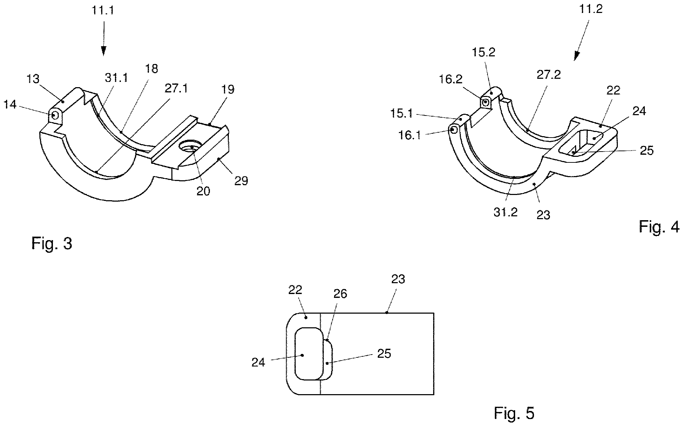

Des weiteren weist der Rohrabschnitt 3 zum Kupplungsstück 2 hin einen Aussenring 6 auf, der allerdings zum Kupplungsstück 2 hin beabstandet ist, so dass hier zwischen Kupplungsstück 2 und Aussenring 6 ein Ringkanal 7 ausgebildet ist. Dieser Ringkanal 7 dient der Aufnahme eines in den Figuren 3 und 4 näher gezeigten und später beschriebenen Innenflansches aus zwei Innenflanschteilen 27.1 und 27.2.

Zur Festlegung des Rohres 1 auf dem Rohrabschnitt 3 dient eine Schelle 10.1. Diese Schelle 10.1 besteht aus zwei Schalen 11.1 und 11.2, die über ein Gelenk 12 miteinander verbunden sind. Dabei ist der Schale 11.1 ein Gelenkstreifen 13 mit einem Durchgangsloch 14 und der Schale 11.2 zwei beabstandete Gelenkstreifen 15.1 und 15.2 mit jeweils Durchgangslöchern 16.1 und 16.2 angeformt. Der Gelenkstreifen 13 wird in Gebrauchslage zwischen die beiden Gelenkstreifen 15.1 und 15.2 eingesetzt und in die Durchgangslöcher 14, 16.1 und 16.2 ein Gelenkstift 17 eingeschoben.

Bei der Schale 11.1 befindet sich der Gelenkstreifen 13 auf einer Seite der offenen Schale. Ihm gegenüber ist einem Schalenkörper 18 eine Lasche 19 angeformt, die eine Aufnahme 20 für einen Schraubenbolzen 21 aufweist. In Gebrauchslage wirkt mit der Lasche 19 eine weitere Lasche 22 an einem Schalenkörper 23 der Schale 11.2 zusammen. Auch in diese Lasche 22 ist eine Ausnehmung 24 eingeformt, die allerdings etwa rechteckartig ausgestaltet ist und der Aufnahme einer rechteckförmigen Mutter dient, die durch diese Ausnehmung 24 hindurchgeschoben werden kann.

In einem Teil des Bereichs der Ausnehmung 24 ist in den Schalenkörper 23 eine Höhlung 25 eingebracht, die einen Anschlag 26 für die oben erwähnte Mutter bilden kann.

Die Funktionsweise der vorliegenden Erfindung ist folgende:
Zum Verbinden des Rohres 1 mit dem Kupplungsstück 2 wird das Rohr 1 auf den Rohrabschnitt 3 aufgeschoben. Dies geschieht bis zu dem Aussenring 6, an dem die Stirnkante des Rohres 1 anschlägt. Nunmehr werden die beiden Schalen 11.1 und 11.2, die miteinander über das Gelenk 12 verbunden sind, auf diesen Bereich aufgesetzt. Dabei greifen die oben erwähnten und jeweils randseitig dem Schalenkörper 18 bzw. 23 angeformten Innenflanschteile 27.1 und 27.2 in den Ringkanal 7 zwischen Aussenring 6 und Kupplungsstücke 2 ein, so dass die Schelle 10.1 gegenüber dem Kupplungsstück 2 positioniert ist. Die beiden Schalen 11.1 und 11.2 werden dabei um das Rohr 1 herumgelegt, so dass die beiden Laschen 19 und 22 aufeinander liegen. Durch die Ausnehmung 20 ist bereits der Schraubenbolzen 21 durchgeschoben. Auf sein freies Ende ist die oben erwähnte Mutter aufgeschraubt. Zwischen einem Schraubenkopf 28 und einer Aussenfläche 29 der Lasche 19 umfängt eine Schraubenfeder 30 den entsprechenden Schraubenbolzen.

Gegen die Kraft der Schraubenfeder 30 wird nun der Schraubenbolzen 21 gegen die Aussenfläche 29 der Lasche 19 hin gedrückt, wobei gleichzeitig die Mutter durch die Ausnehmung 24 der Lasche 22 geschoben wird. Nachdem die Mutter aus der Ausnehmung 24 heraus geschoben ist, befindet sie sich auf der Höhe der Höhlung 25 und kann nun mit dem Schraubenbolzen 21 gedreht werden. Hierbei fährt sie in die Höhlung 25 ein und schlägt gegen den Anschlag 26 an, so dass sie verdrehgesichert ist. Jetzt kann der Schraubenbolzen 21 weiter angezogen werden, so dass die beiden Laschen 19 und 22 sich schliessen. Beim Schliessen dieser Laschen 19 und 22 wird ein Ringwall 31.1 und 31.2, der jeweils auf einer Innenfläche des Schalenkörpers 18 bzw. 23 vorgesehen ist, in das Fleisch des Rohres 1 eingedrückt, so dass dieses Rohr 1 auf dem Rohrabschnitt 3 klemmend gehalten ist. Ggf. wird gleichzeitig auch in dem Rohrabschnitt 3 eine entsprechende Vertiefung eingeformt.

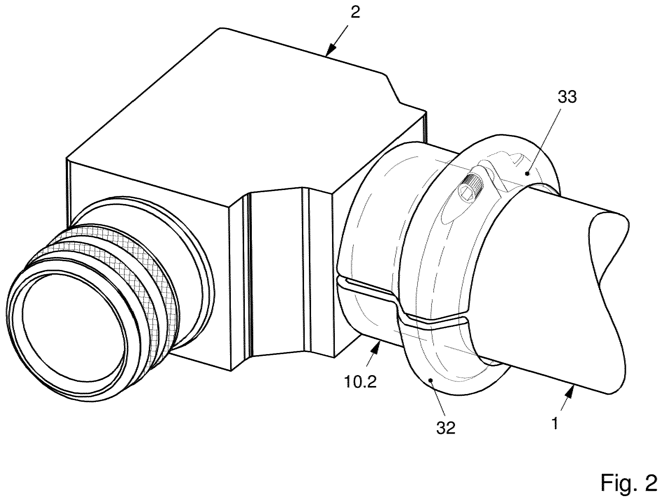

In dem Beispiel gemäss Figur 2 ist erkennbar, dass eine Schelle 10.2 anstelle oder zusätzlich zu dem Ringwall 31.1 und 31.2 ein Schalenteil 32 aufweist, welches so ausgebildet ist, dass es eine Ringschelle 33 übergreift. Diese Ringschelle 33 kann beispielsweise klemmend auf dem Rohr 1 festgelegt sein, sie kann aber auch zusätzlich an ihrer Innenfläche einen Ringwall aufweisen, der ähnlich dem Ringwall 31.1/31.2 ausgebildet ist. Die Ringschelle steht im vorliegenden Fall stellvertretend für alle möglichen Ausgestaltungen, die ein Hindernis auf dem Rohr 1 bilden können, welches bewirkt, dass die Schelle 10.2 einerseits mit den Innenflanschteilen 27.1/27.2 und andererseits mittels des Schalenteils 32 festgelegt ist.

**Bezugszeichenliste**

| | | | | | |
|---|---|---|---|---|---|
| 1 | Rohr | 34 | | 67 | |
| 2 | Kupplungsstück | 35 | | 68 | |
| 3 | Rohrabschnitt | 36 | | 69 | |
| 4 | Ringnut | 37 | | 70 | |
| 5 | Ringdichtung | 38 | | 71 | |
| 6 | Aussenring | 39 | | 72 | |
| 7 | Ringkanal | 40 | | 73 | |
| 8 | | 41 | | 74 | |
| 9 | | 42 | | 75 | |
| 10 | Schelle | 43 | | 76 | |
| 11 | Schale | 44 | | 77 | |
| 12 | Gelenk | 45 | | 78 | |
| 13 | Gelenkstreifen | 46 | | 79 | |
| 14 | Durchgangsloch | 47 | | | |
| 15 | Gelenkstreifen | 48 | | | |
| 16 | Durchgangsloch | 49 | | | |
| 17 | Gelenkstift | 50 | | | |
| 18 | Schalenkörper | 51 | | | |
| 19 | Lasche | 52 | | | |
| 20 | Aufnahme | 53 | | | |
| 21 | Schraubenbolzen | 54 | | | |
| 22 | Lasche | 55 | | | |
| 23 | Schalenkörper | 56 | | | |
| 24 | Ausnehmung | 57 | | | |
| 25 | Höhlung | 58 | | | |
| 26 | Anschlag | 59 | | | |
| 27 | Innenflanschteil | 60 | | | |
| 28 | Schraubenkopf | 61 | | | |
| 29 | Außenfläche | 62 | | | |
| 30 | Schraubenfeder | 63 | | | |
| 31 | Ringwall | 64 | | | |
| 32 | Schalenteil | 65 | | | |
| 33 | Ringsschelle | 66 | | | |

## Patentansprüche

1. System aufweisend ein Rohr (1) zum Leiten eines Mediums, insbesondere eines gasförmigen oder flüssigen Mediums, in dem Rohr (1), wobei das System ein Kupplungsstück (2) mit einem Rohrabschnitt (3) sowie eine Schelle (10.1) aufweist, wobei das Rohr (1) mit dem Kupplungsstück (2) mittels der Schelle (10.1) verbindbar ist, wobei der Rohrabschnitt (3) und/oder das Rohr (1) einen Anschlag (6) für das Rohr (1) und/oder den Rohrabschnitt (3) aufweist, der von der Schelle (10.1) hintergreifbar ist, **dadurch gekennzeichnet,**
**dass** die Schelle (10.1) aus zumindest zwei Schalen (11.1,11.2) besteht, die gelenkig miteinander verbunden sind und jede Schale eine Lasche (19, 22) ausbildet, die in Schliesslage aneinander liegen und jeweils eine Ausnehmung (20, 24) aufweisen, wobei eine Ausnehmung (20) der Aufnahme eines Schraubenbolzen (21) und die andere Ausnehmung (24) der Aufnahme einer Mutter dient, wobei der Ausnehmung (24) zur Aufnahme der Mutter an einer Stelle ein Anschlag (26) zugeordnet ist, gegen den die Mutter drehbar ist und wobei der Schraubenbolzen (21) gegen die Kraft einer Feder (30) zusammen mit der Mutter in den Bereich des Anschlags (26) führbar ist.

2. System nach Anspruch 1, **dadurch gekennzeichnet, dass** der Rohrabschnitt (3) einen Aussenring (6) aufweist, an den das Rohr (1) beim Aufschieben auf den Rohrabschnitt (3) anschlägt und der von der Schelle (10.1) über- und hintergriffen wird.

3. System nach Anspruch 2, **dadurch gekennzeichnet, dass** zwischen dem Aussenring (6) und einem Kupplungsblock ein Ringkanal (7) ausgebildet ist.

4. System nach wenigstens einem der vorhergehenden Ansprüche, **dadurch gekennzeichnet, dass** die Schelle (10.1) einerseits einen Innenflansch (27.1,27.2) aufweist.

5. System nach wenigstens einem der vorhergehenden Ansprüche, **dadurch gekennzeichnet, dass** die Schelle (10.1) im Inneren einen Ringwall (31.1,31.2) aufweist.

6. System nach wenigstens einem der vorhergehenden Ansprüche, **dadurch gekennzeichnet, dass** die Schelle eine Ringschelle (33) übergreift, die dem Rohr (1) klemmend aufgesetzt ist.

7. System nach wenigstens einem der vorhergehenden Ansprüche, **dadurch gekennzeichnet, dass** im Bereich der Schelle (10.1) in einer Ringnut (4.1,4.2) des Rohrabschnitts (3) zumindest eine Ringdichtung (5.1,5.2) eingesetzt ist.

8. System nach wenigstens einem der vorhergehenden Ansprüche, **dadurch gekennzeichnet, dass** im Bereich der Schelle (10.1) in einer Ringnut des Rohrs zumindest eine Ringdichtung eingesetzt ist.

## Claims

1. A system having a pipe (1) for conducting a medium, in particular a gaseous or liquid medium, in the pipe (1), wherein the system has a coupling piece (2) with a pipe portion (3) and also a clip (10.1), wherein the pipe (1) can be connected to the coupling piece (2) by means of the clip (10.1),
wherein the pipe portion (3) and/or the pipe (1) has/have a stop (6) for the pipe (1) and/or the pipe portion (3), behind which the clip (10.1) can engage,
**characterised in that**
the clip (10.1) consists of at least two shells (11.1, 11.2),
which are articulated together and each shell forms a lug (19, 22) which lie against each other in the closing position and in each case have a cutout (20, 24), one cutout (20) serving to receive a screw bolt (21) and the other cutout (24) serving to receive a nut, a stop (26) being associated with the cutout (24) for receiving the nut at a point, against which stop the nut can be turned, and the screw bolt (21) being able to be guided counter to the force of a spring (30) together with the nut in the region of the stop (26).

2. A system according to Claim 1, **characterised in that** the pipe portion (3) has an external ring (6) against which the pipe (1) strikes when pushed onto the pipe portion (3) and over and behind which the clip (10.1) engages.

3. A system according to Claim 2, **characterised in that** an annular duct (7) is formed between the external ring (6) and a coupling block.

4. A system according to at least one of the preceding claims, **characterised in that** the clip (10.1) has an inner flange (27.1, 27.2) on one side.

5. A system according to at least one of the preceding claims, **characterised in that** the clip (10.1) has an annular wall (31.1, 31.2) in its interior.

6. A system according to at least one of the preceding claims, **characterised in that** the clip engages over a ring clip (33) which is placed in clamping manner on the pipe (1).

7. A system according to at least one of the preceding claims, **characterised in that** at least one annular seal (5.1, 5.2) is inserted in the region of the clip (10.1) in an annular groove (4.1, 4.2) of the pipe portion (3).

8. A system according to at least one of the preceding claims, **characterised in that** at least one annular seal is inserted in the region of the clip (10.1) in an annular groove of the pipe.

## Revendications

1. Système présentant un tube (1) destiné à guider un milieu, en particulier un milieu gazeux ou liquide dans le tube (1), dans lequel le système présente une pièce de couplage (2) avec un segment de tube (3) ainsi qu'une bride de serrage (10.1), le tube (1) pouvant être assemblé avec la pièce de couplage (2) au moyen de la bride de serrage (10.1), le segment de tube (3) et/ou le tube (1) présentant une butée (6) pour le tube (1) et/ou le segment de tube (3) derrière laquelle peut venir en prise la bride de serrage (10.1),
**caractérisé par le fait**
**que** la bride de serrage (10.1) se compose d'au moins deux coquilles (11.1, 11.2) qui sont connectées de manière articulée entre elles et chaque coquille forme une languette (19, 22), lesquelles sont adjacentes l'une à l'autre en position de fermeture et présentent, chacune, un évidement (20, 24), un évidement (20) servant à recevoir un boulon fileté (21) et l'autre évidement (24) servant à recevoir un écrou, à l'évidement (24) destiné à recevoir l'écrou étant associée, à un endroit, une butée (26) contre laquelle peut tourner l'écrou et le boulon fileté (21) pouvant être guidé à l'encontre de la force d'un ressort (30) ensemble avec l'écrou à l'endroit de la butée (26).

2. Système selon la revendication 1, **caractérisé par le fait que** le segment de tube (3) présente une bague extérieure (6) contre laquelle vient en butée le tube (1) lors de son enfilement sur le segment de tube (3) et par-dessus et derrière lequel vient en prise la bride de serrage (10.1).

3. Système selon la revendication 2, **caractérisé par le fait qu'**entre la bague extérieure (6) et un bloc de couplage est formé un canal annulaire (7).

4. Système selon au moins l'une des revendications précédentes, **caractérisé par le fait que** la bride de serrage (10.1) présente d'un côté une bride intérieure (27.1, 27.2).

5. Système selon au moins l'une des revendications précédentes, **caractérisé par le fait que** la bride de serrage (10.1) présente à l'intérieur une paroi annulaire (31.1, 31.2).

6. Système selon au moins l'une des revendications précédentes, **caractérisé par le fait que** la bride de serrage vient en prise par-dessus une bride annulaire (33) qui est placée sur le tube (1) de manière à le serrer.

7. Système selon au moins l'une des revendications précédentes, **caractérisé par le fait qu'**à l'endroit de la bride de serrage (10.1) est placé, dans une rainure annulaire (4.1, 4.2) du segment de tube (3), au moins un joint d'étanchéité annulaire (5.1, 5.2).

8. Système selon au moins l'une des revendications précédentes, **caractérisé par le fait qu'**à l'endroit de la bride de serrage (10.1) est placé, dans une rainure annulaire du tube, au moins un joint d'étanchéité annulaire.
